# FASCICULE DE BREVET EUROPEEN

(11) **EP 0 773 395 B1**
(45) Date de publication et mention de la délivrance du brevet: **07.08.2002**
(21) Numéro de dépôt: 96420329.3
(22) Date de dépôt: 07.11.1996
(51) Int. Cl.: F16K 35/02, F16K 35/10

(54) **Poignée de commande d'un robinet à verrou inviolable et robinet équipé d'une telle poignée**
Betätigungsgriff mit geschütztem Riegel für einen Hahn und damit ausgestatteter Hahn
Operation lever with protected bolt for a cock and cock equipped with it

(30) Priorité: 09.11.1995 FR 9513494
(43) Date de publication de la demande: 14.05.1997
(73) Titulaire: Société Anonyme de Fabrication Industrielle SAFI, 26770 Taulignan (FR)
(72) Inventeur: Moison, Jacques-Raymond, La Louvière, 84600 Valréas (FR)
(74) Mandataire: Thibault, Jean-Marc

(56) Documents cités:
- FR-A- 1 090 120
- FR-A- 2 619 190
- US-A- 1 351 391
- US-A- 4 126 023

## Description

La présente invention concerne le domaine technique des robinets ou des vannes au sens général, et elle vise, plus précisément, les robinets du type comportant dans un corps, un obturateur tournant susceptible de fermer ou d'ouvrir un passage pour un fluide. L'invention vise encore plus précisément, les vannes ou les robinets dont l'obturateur est manoeuvré en rotation par l'intermédiaire d'une commande manuelle, telle qu'une poignée.

Dans le domaine technique préféré ci-dessus, il est connu, par exemple, par le brevet **FR 2 619 190,** un robinet conforme au préambule de la revendication 1 et comportant dans un corps, un passage de fluide dans lequel est interposé un obturateur tournant susceptible d'interrompre ou de libérer le passage de fluide. L'obturateur est monté solidaire d'un arbre de pivotement logé dans le corps du robinet de telle sorte que son axe soit perpendiculaire à l'axe de passage du fluide. L'arbre de pivotement présente un embout dépassant du corps de robinet et sur lequel une tête de manoeuvre d'une poignée est fixée aussi bien axialement, qu'en rotation. La poignée est équipée d'une paire de butées de pivotement prévues, chacune, en face d'une des deux extrémités du trajet de pivotement de 90° de la poignée. Ces butées sont destinées à coopérer avec des contre-butées aménagées sur une partie cylindrique s'élevant sur une faible hauteur à partir du corps du robinet.

La poignée de commande est également pourvue d'un verrou mobile guidé dans une gorge de guidage ménagée dans la tête de manoeuvre, parallèlement à l'axe de l'arbre de pivotement. Le verrou est porté par un bras élastique fixé par encliquetage sur la partie arrière d'une branche de manoeuvre de la poignée. Le verrou est destiné à être engagé, au moins partiellement, à l'intérieur d'une cavité de blocage aménagée sur le corps du robinet, de façon à recevoir ledit verrou lorsque la poignée et l'obturateur sont dans la position de fermeture du robinet. La poignée comporte, également, un moyen d'accrochage pour une butée amovible, telle que l'anse d'un cadenas ou une plaquette plombée, conçue pour empêcher l'extraction libre du verrou hors de la cavité de blocage.

Un tel robinet présente donc la caractéristique d'être verrouillable et inviolable en position fermée ou d'obturation du passage de fluide. Si un tel robinet donne satisfaction en pratique, il a été constaté que, lors de la manipulation de la poignée effectuée dans des conditions particulières anormales et répétées, le verrou était soumis à des sollicitations mécaniques importantes conduisant quelquefois à sa rupture par rapport à son bras porteur.

La présente invention vise donc à remédier à l'inconvénient énoncé ci-dessus en proposant une poignée de commande d'un robinet permettant de verrouiller l'obturateur dans au moins une position stable de référence et d'assurer l'inviolabilité de la position occupée par l'obturateur, même en cas de manipulation de la poignée dans des conditions d'utilisation anormales.

Pour atteindre cet objectif, la poignée de commande d'un robinet à verrou inviolable comporte :
- une tête de manoeuvre destinée à être montée solidaire d'un embout dépassant du corps du robinet et prolongeant un arbre de pivotement solidaire d'un obturateur tournant susceptible d'interrompre ou de libérer un passage de fluide ménagé dans le corps du robinet,
- un verrou mobile guidé dans une gorge de guidage ménagée dans la tête de manoeuvre parallèlement à l'axe de l'arbre de pivotement, le verrou étant destiné à être engagé au moins partiellement, à l'intérieur d'une cavité de blocage aménagée sur le corps du robinet, de façon à recevoir ledit verrou lorsque la poignée et l'obturateur sont dans la position de fermeture du robinet,
- et un moyen d'accrochage pour une butée amovible qui empêche l'extraction libre du verrou hors de la cavité de blocage.

Selon l'invention, la tête de manoeuvre comporte un logement dans lequel débouche la gorge de guidage, et le verrou est équipé d'un arrêt destiné à être inséré à l'intérieur dudit logement et à assurer une anti-extraction du verrou hors de la gorge de guidage, selon un mouvement de recul du verrou dans une direction perpendiculaire à l'axe de l'arbre de pivotement.

La poignée selon l'invention permet ainsi de disposer d'un verrou mobile qui se trouve guidé aussi bien latéralement, qu'axialement à l'intérieur de la gorge de guidage, de sorte que, quelles que soient les sollicitations mécaniques qu'il reçoit, le verrou est capable d'assurer, dans le temps, sa fonction de verrouillage.

Un autre objet de l'invention vise également à remédier à un autre inconvénient présenté par le dispositif antérieur. La poignée connue comporte, en effet, un verrou porté par un bras élastique dont la partie arrière est fixée par encliquetage sur la poignée. La réalisation d'une telle poignée de commande nécessite donc des opérations de reprise des pièces et de montage.

Pour remédier à cet inconvénient, la poignée selon l'invention comporte un verrou qui est monté sur la partie terminale d'un bras mobile relié à l'extrémité arrière d'une branche prolongeant la tête de manoeuvre, le bras mobile, la branche et la tête de manoeuvre formant une pièce monobloc.

L'objet de l'invention vise, également, à remédier à un autre inconvénient du robinet connu qui comporte, en tant que contre-butées, des rainures aménagées sur une partie cylindrique du corps du robinet. Il apparaît ainsi que ces rainures et la cavité de blocage du verrou, sont susceptibles d'être occupées, au moins en partie, par des corps étrangers susceptibles d'entraver le bon fonctionnement de la poignée de commande.

Pour remédier à un tel inconvénient, la poignée de commande selon l'invention est pourvue d'une tête de manoeuvre équipée d'une jupe de protection dont la face interne sert d'appui à l'arrêt du verrou, la jupe, qui est équipée, par ailleurs, d'une paire de butées de pivotement, venant coiffer la partie cylindrique du corps du robinet équipé de contre-butées de pivotement.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue en élévation d'une coupe verticale d'un robinet, la coupe passant par l'axe de passage de fluide.

La **fig. 2** est une vue partielle en perspective d'un détail caractéristique du robinet illustré à la **fig. 1.**

La **fig. 3** est une vue en coupe-élévation d'une poignée de commande destinée à être montée sur le robinet illustré aux **fig. 1** et **2.**

La **fig. 4** est une vue de dessous prise sensiblement selon les lignes IV-IV de la **fig. 3.**

La **fig. 5** est une vue en coupe-élévation montrant un robinet équipé d'une poignée conforme à l'invention.

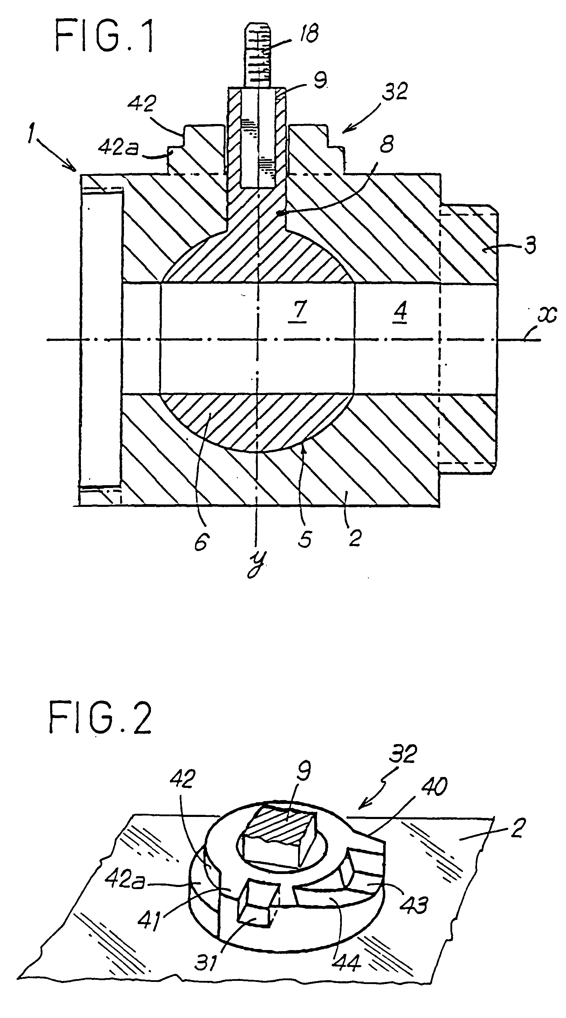

Les **fig. 1** et **2** illustrent un robinet **1,** du type à deux voies, comprenant un corps **2** de forme générale cylindrique tubulaire, réalisé de préférence, en matière thermoplastique, thermodurcissable ou composite. Le corps **2** présente, à chaque extrémité, une tubulure de raccordement filetée **3** destinée à recevoir une conduite ou une canalisation d'un fluide. Le corps **2** comporte un passage de fluide **4** ménagé selon un axe longitudinal **x**. Le passage **4** débouche, à chaque extrémité du corps, par un tronçon de forme générale cylindrique, ces tronçons se raccordant dans la partie médiane du corps à une cavité sphérique **5** de logement d'un obturateur **6** de forme complémentaire.

L'obturateur **6** comporte un alésage cylindrique **7** d'un diamètre identique à celui du passage **4.** L'obturateur **6** présente un arbre de rotation **8** faisant saillie hors du corps **2** par l'intermédiaire d'un embout **9.** L'obturateur **6** peut être pivoté, dans le cas d'un robinet à deux voies, de 90° autour d'un axe **y** perpendiculaire à l'axe **x** du passage **4** entre une première position, dite d'ouverture, dans laquelle l'alésage **7** est aligné avec les deux tronçons du passage et une seconde position, dite de fermeture, dans laquelle la surface extérieure de l'obturateur ferme complètement et de façon étanche, le passage du fluide.

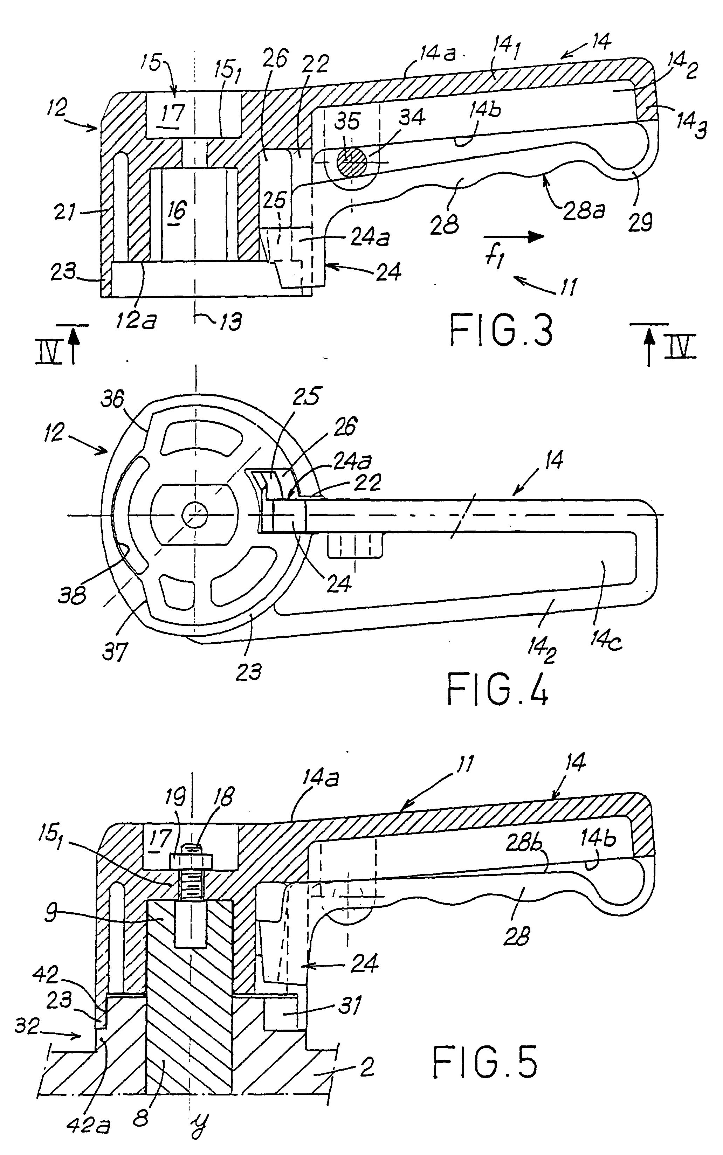

L'embout **9** de l'arbre de pivotement, qui présente une section transversale polygonale, est destiné à recevoir une poignée de commande **11**. Tel que cela ressort plus précisément des **fig. 3** et **4,** la poignée de commande **11** comporte une tête de manoeuvre **12** de forme générale cylindrique présentant un axe central **13** destiné à venir coïncider avec l'axe **y** de l'arbre de pivotement. La poignée **11** comporte, également, une branche **14** s'étendant perpendiculairement à l'axe **13,** en étant raccordée à la tête de manoeuvre **12** dans un plan décalé par rapport à celui passant par l'axe central **13.** La branche de manoeuvre **14** présente une section transversale en "U" inversée, dont la paroi de fond **14**_{**1**} délimite la face externe **14a** et dont les parois latérales **14**_{**2**} définissent, par leurs bords, la face interne **14b.**

La tête de manoeuvre **12** présente un alésage central **15** subdivisé par un épaulement interne intermédiaire **15**_{**1**} en, d'une part, un alésage d'accouplement **16,** qui présente une section transversale identique à celle de l'embout **9** et qui est destinée à coiffer ledit embout et, d'autre part, en un alésage de serrage **17** dans lequel pénètre une partie filetée d'une tige de liaison **18** fixée dans la masse de l'embout **9,** de telle sorte que l'axe de la tige de liaison coïncide avec l'axe de pivotement **y** de l'arbre **8.** Un écrou **19** est logé dans l'alésage de serrage **17** jusqu'à ce qu'il porte contre l'épaulement interne **15**_{**1**} (**fig. 5**). Il est ainsi établie, de façon connue, une liaison ferme entre la poignée **11** et l'arbre de pivotement **8** de l'obturateur, aussi bien axialement, qu'angulairement. Du côté de la face externe **14a** de la poignée **11,** l'alésage de serrage **17** peut être recouvert d'un capuchon non représenté s'agrippant sur la paroi interne dudit alésage.

La tête de manoeuvre **12** de la poignée comporte, sur son pourtour, une nervure **21** dans laquelle est pratiquée, du côté de la branche **14,** une gorge de guidage **22** qui s'étend parallèlement à l'axe **13,** à partir sensiblement de la face interne **14b** de la branche **14,** jusqu'à la face frontale **12a** de la tête de manoeuvre.

Selon une caractéristique avantageuse de l'invention, la tête de manoeuvre **12** comporte sur son pourtour, dans le prolongement de la nervure **21** et au-delà de la face frontale **12a,** une jupe de protection **23** dont la fonction sera mieux comprise dans la suite de la description et dans laquelle la gorge de guidage **22** est prolongée.

La gorge **22** sert de logement à un verrou mobile **24** qui est constamment sollicité par un organe élastique en direction du corps de robinet **2.** Le verrou **24** présente deux faces latérales parallèles **24a** délimitant l'épaisseur du verrou qui, au jeu près, est sensiblement égale à la largeur de la gorge **22.** Le verrou **24** se trouve ainsi guidé latéralement à l'intérieur de la gorge **22,** par l'intermédiaire de ses faces latérales **24a.** Tel que cela ressort plus précisément de la **fig. 3,** le verrou **24** est conformé pour présenter une hauteur déterminée d'engagement à l'intérieur de la gorge **22,** de manière que le verrou se trouve convenablement guidé latéralement dans la gorge. Selon une caractéristique avantageuse, il est à noter, comme il sera expliqué plus loin, que le verrou **24** est conçu pour être, en position d'utilisation de la poignée, complètement logé à l'intérieur de la gorge de guidage **22.**

Tel que cela ressort plus précisément de la **fig. 4,** le verrou **24** est équipé d'une saillie, d'une butée ou d'un arrêt **25** s'étendant, dans l'exemple illustré, transversalement à partir d'une face latérale **24a** du verrou. L'arrêt **25** est destiné à être inséré à l'intérieur d'un logement **26** pratiqué à l'intérieur de la tête de manoeuvre **12** et dans lequel débouche la gorge **22.** L'arrêt **25** est destiné à assurer une fonction d'anti-extraction du verrou hors de la gorge **22,** selon un mouvement de recul du verrou dans un sens perpendiculaire à l'axe **13** et schématisé par la flèche **f**_{**1**}. L'arrêt **25** est aménagé sur le verrou **24** pour venir en appui sur la face interne de la nervure **21** limitant ainsi le déplacement du verrou selon la flèche **f**_{**1**}**.**

Dans un exemple préféré de réalisation, le verrou **24** est monté solidaire, par son extrémité arrière, de l'extrémité frontale d'un bras élastique **28** dont l'extrémité arrière est fixée sur la partie arrière de la branche **14.** Selon une caractéristique avantageuse de l'invention, la poignée **11** comportant, notamment, le bras **28,** le verrou **24,** la branche **14** et la tête de manoeuvre **12** constitue une seule pièce monobloc réalisée par moulage. Il est à noter qu'en sortie de moule, le verrou **24** ne se trouve pas engagé dans la gorge **22.** Pour son utilisation, le bras élastique **28** est rapproché de la branche **14** jusqu'à ce que le verrou vienne s'engager dans la gorge **22,** à partir de son extrémité ouverte réalisée dans la jupe **23.** Dans un tel mouvement, l'arrêt **25** est amené pour venir s'insérer à l'intérieur du logement **26**. En position de non sollicitation, le bras élastique **28** exerce un effort de poussée sur le verrou **24** qui est maintenu à l'intérieur de la gorge **22** par l'intermédiaire de l'arrêt **25** venant en appui contre la face interne de la jupe **23.**

Tel que cela ressort clairement de la **fig. 3,** l'extrémité arrière du bras élastique **28** comporte un coude **29** recourbé vers l'extrémité arrière de la branche **14.** Le coude **29** comporte ainsi une partie s'étendant sensiblement dans le prolongement de la paroi arrière **14**_{**3**} de la branche **14,** au niveau sensiblement de l'une des parois latérales **14**_{**2**}. Selon une telle disposition, le bras **28** présente une élasticité qui lui est conférée, plus particulièrement, par la zone de jonction entre le coude **29** et l'extrémité arrière du bras **28.** Avantageusement, le bras **28** présente une face inférieure **28a** conformée pour présenter des festons facilitant la préhension de ce bras mobile. De préférence encore, le bras mobile **28** est limité dans son déplacement par l'intermédiaire d'un organe d'arrêt évitant toute déformation élastique trop importante du bras. Dans l'exemple illustré plus particulièrement à la **fig. 5,** le bras mobile **28** est limité dans son déplacement par la face inférieure **14b** de la branche de la poignée, sur laquelle vient en appui la face supérieure **28b** du bras. Il est à noter, également, qu'il peut être prévu d'aménager le bras mobile **28** et/ou la branche **14,** en réalisant, par exemple, une saillie de façon à limiter au plus juste le déplacement du bras mobile.

Le verrou **24** est destiné à être engagé, au moins partiellement, dans une cavité ou encoche de blocage **31** qui est ménagée dans une partie cylindrique latérale **32** s'élevant sur une faible hauteur à partir du corps de robinet **2.** La cavité de blocage **31** est ménagée dans une position angulaire qui, compte-tenu de la liaison en rotation entre la poignée **11** et l'obturateur **6,** est telle qu'elle correspond à la position extrême de fermeture dudit obturateur **6.** L'engagement du verrou **24** à l'intérieur de la cavité de blocage **31** empêche l'obturateur **6** et la poignée **11** de passer de la position de fermeture à la position d'ouverture. Ce n'est qu'après le retrait du verrou **24,** dégagé élastiquement de l'encoche de blocage **31,** de manière qu'il ne dépasse plus de la face frontale **12a** (**fig. 5**), que la poignée **11** peut être pivotée dans la position d'ouverture. Au verrou **24** est associé un moyen d'accrochage **34** pour un organe de butée amovible **35,** tel que l'anse d'un cadenas ou une plaquette plombée, empêchant le verrou **24** de quitter librement la cavité de blocage **31.** Le moyen d'accrochage **34** est avantageusement constitué par un anneau rigide fixé sur la face interne de la paroi de fond **14**_{**1**} de la branche **14.** Tel que cela ressort de la **fig. 3,** la butée amovible **35** limite le rapprochement du bras élastique **28** en direction de la branche **14,** de telle sorte que le verrou **24** reste engagé à l'intérieur de la cavité de blocage **31.** De préférence, l'anneau rigide **34** est positionné de manière que la face interne **14b** de la branche sert de contre-butée à l'anse d'un cadenas ou à la plaquette plombée engagée dans l'anneau **34.**

Selon une caractéristique avantageuse de l'invention, la tête de manoeuvre **12** de la poignée et la partie cylindrique latérale **32** du corps de robinet comportent des moyens de butées permettant de positionner la poignée dans ses positions de fermeture et d'ouverture du robinet. La tête de manoeuvre **12** est pourvue, selon la paroi interne de la jupe **23,** d'une paire de butées de pivotement **36** et **37** raccordées entre-elles par un segment de guidage **38** de rayon centré sur l'axe **13.** Tel que cela ressort de la **fig. 4,** les butées **36, 37** sont formées dans la masse de la jupe **23** qui constitue une nervure périphérique s'étendant au-delà de la paroi frontale **12a.** Les butées **36** et **37** sont destinées à coopérer avec des contre-butées **40** et **41** aménagées sur la partie cylindrique **32** du corps du robinet, limitant ainsi la course de pivotement de la poignée **11** et de l'obturateur **6** entre leur deux positions extrêmes, à savoir d'ouverture et de fermeture. Tel que cela ressort plus précisément de la **fig. 2,** les contre-butées **40** et **41** sont formées par des saillies s'étendant latéralement à partir d'une paroi de guidage **42** en arc de cercle, parallèle et centrée sur l'axe de pivotement **y** de la poignée. La paroi de guidage **42** est destinée à coopérer avec le segment complémentaire **38** de la poignée et se trouve prolongée du côté du corps **2,** par un épaulement **42a** en arc de cercle centré sur l'axe **y** et au-dessus duquel le bord de la jupe **23** est positionné.

Selon une autre caractéristique de l'invention, la partie cylindrique **32** du corps du robinet est munie d'un évidement de repos **43** destiné à recevoir l'extrémité frontale du verrou **24,** de sorte que ce dernier se trouve moins sollicité par les moyens élastiques. La partie latérale cylindrique **32** du corps reçoit cet évidement de repos à l'endroit correspondant à l'emplacement du verrou **24** en position d'ouverture de la poignée **11.** Entre cet évidement de repos **43** et la cavité de blocage **31** est prévue une rampe oblique **44** allant du fond de l'évidement à la face supérieure de ladite cavité **31.** De ce fait, le verrou **24** est automatiquement repoussé dans sa gorge de guidage **22,** lorsque la poignée **11** est pivotée de la position d'ouverture vers la position de fermeture.

Tel que cela ressort plus précisément de la **fig. 5,** la jupe **23** de la tête de manoeuvre est destinée à venir coiffer la partie cylindrique latérale **32** du corps. La jupe **23** empêche ainsi l'introduction de corps étrangers sur cette partie et, notamment, au niveau de la cavité de blocage **31,** la rampe **44,** l'évidement de repos **43,** des butées **36, 37** et du segment de guidage **38.**

La poignée selon l'invention, qui est constituée avantageusement d'une seule pièce, présente l'avantage de comporter un verrou qui, en position d'utilisation, est entièrement guidé latéralement et axialement. En effet, en position d'utilisation de la poignée, le verrou **24** se trouve complètement introduit dans la gorge **22,** tandis que son arrêt **25** est placé dans le logement **26.** Il s'ensuit que le verrou **24** est apte à résister à des sollicitations mécaniques anormales imposées, par exemple, au bras élastique **28.**

## Revendications

1. Poignée de commande d'un robinet à verrou inviolable, la poignée (**11**) comportant :
- une tête de manoeuvre (**12**) destinée à être montée solidaire d'un embout (**9**) dépassant du corps (**2**) du robinet et prolongeant un arbre de pivotement (**8**) solidaire d'un obturateur tournant (**6**) susceptible d'interrompre ou de libérer un passage de fluide (**4**) ménagé dans le corps du robinet,
- un verrou mobile (**24**) guidé dans une gorge de guidage (**22**) ménagée dans la tête de manoeuvre parallèlement à l'axe (**y**) de l'arbre de pivotement, le verrou (**24**) étant destiné à être engagé au moins partiellement, à l'intérieur d'une cavité de blocage (**31**) aménagée sur le corps du robinet, de façon à recevoir ledit verrou lorsque la poignée (**11**) et l'obturateur (**6**) sont dans la position de fermeture du robinet,
- et un moyen d'accrochage (**34**) pour une butée amovible (**35**) qui empêche l'extraction libre du verrou (**24**) hors de la cavité de blocage (**31**),
**caractérisée en ce que** la tête de manoeuvre (**12**) comporte un logement (**26**) dans lequel débouche la gorge de guidage (**22**), et **en ce que** le verrou (**24**) est équipé d'un arrêt (**25**) destiné à être inséré à l'intérieur dudit logement et à assurer une anti-extraction du verrou hors de la gorge de guidage, selon un mouvement de recul du verrou dans une direction perpendiculaire à l'axe (9) de l'arbre de pivotement .

2. Poignée de commande selon la revendication 1, **caractérisée en ce que** le verrou (**24**) et la gorge de guidage (**22**) sont conformés afin, qu'en position d'utilisation de la poignée, le verrou (**24**) se trouve entièrement guidé latéralement dans la gorge (**22**).

3. Poignée de commande selon la revendication 1 ou 2, **caractérisée en ce que** le verrou (**24**) est monté sur la partie terminale d'un bras mobile (**28**) relié à l'extrémité arrière d'une branche (**14**) prolongeant la tête de manoeuvre, le bras mobile (**28**), la branche (**14**) et la tête de manoeuvre (**12**) formant une pièce monobloc.

4. Poignée de commande selon la revendication 3, **caractérisée en ce que** le bras mobile (**28**) est conformé avec la branche de la poignée (**14**), de façon à constituer un organe élastique sollicitant constamment le verrou (**24**) en direction du corps du robinet.

5. Poignée de commande selon la revendication 3 ou 4, **caractérisée en ce que** le bras mobile (**28**) est relié à l'extrémité arrière de la branche (**14**) par l'intermédiaire d'un coude de liaison (**29**).

6. Poignée de commande selon la revendication 3, 4 ou 5, **caractérisée en ce que** le bras mobile (**28**) est limité dans son déplacement d'extraction du verrou hors de la cavité de blocage, par l'intermédiaire d'un organe d'arrêt limitant la déformation élastique du bras.

7. Poignée de commande selon l'une des revendications 3 à 6, **caractérisée en ce que** le bras mobile (**28**) comporte une face inférieure (**28a**) conformée en festons.

8. Poignée de commande selon la revendication 1 ou 2, **caractérisée en ce que** la tête de manoeuvre (**12**) est pourvue d'une jupe de protection (**23**) destinée à coiffer la partie cylindrique latérale (**32**) du corps (**2**), la jupe (**23**), dans laquelle est prolongée la gorge de guidage (**22**), étant équipée, par ailleurs, d'une paire de butées de pivotement (**36**, **37**) destinées à coopérer avec des contre-butées (**40**, **41**) aménagées sur la partie cylindrique (**32**) du corps du robinet, limitant ainsi la course de pivotement de la poignée et de l'obturateur entre leurs positions extrêmes.

9. Robinet à verrou inviolable, du type comportant :
- dans un corps (**2**) de robinet, un passage de fluide (**4**) dans lequel est interposé un obturateur tournant (**6**) susceptible d'interrompre ou de libérer le passage de fluide, cet obturateur (**6**) étant solidaire d'un arbre de pivotement (**8**) logé dans le corps du robinet, de telle sorte que son axe (**y**) soit perpendiculaire à l'axe (**x**) de passage du fluide et présentant un embout (**9**) dépassant du corps du robinet,
- une poignée (**11**) de commande du robinet comportant :
. une tête (**12**) de manoeuvre de l'embout (**9**) de l'arbre de pivotement,
. un verrou mobile (**24**) guidé dans une gorge de guidage (**22**) ménagée dans la tête de manoeuvre (**12**) parallèlement à l'axe (**y**) de l'arbre de pivotement, le verrou (**24**) étant destiné à être engagé au moins partiellement, à l'intérieur d'une cavité de blocage (**31**) aménagée sur le corps du robinet, de façon à recevoir ledit verrou (**24**) lorsque la poignée (**11**) et l'obturateur (**6**) sont dans la position de fermeture du robinet,
. et un moyen d'accrochage (**34**) pour une butée amovible (**35**) qui empêche l'extraction libre du verrou hors de la cavité de blocage,
**caractérisé en ce qu'**il comporte une poignée de commande (**11**) conforme à la revendication 1.

10. Robinet selon la revendication 9, **caractérisé en ce que** la cavité (**31**) de blocage du verrou (**24**) est ménagée sur une partie latérale cylindrique (**32**) du corps du robinet.

11. Robinet selon la revendication 10, **caractérisé en ce que** la partie latérale cylindrique (**32**) du corps du robinet est munie d'un évidement de repos (**43**) destiné à recevoir l'extrémité frontale du verrou (**24**), de sorte que ce dernier se trouve moins sollicité par les moyens élastiques.

12. Robinet selon la revendication 11, **caractérisé en ce qu'**entre l'évidement de repos (**43**) et la cavité de blocage (**31**) est prévue une rampe (**44**) de guidage du verrou.

13. Robinet selon l'une des revendications 10 à 12, **caractérisé en ce que** la partie latérale cylindrique (**32**) est pourvue, en saillie, d'une paire de contre-butées (**40**, **41**) reliées entre-elles par une paroi de guidage (**42**) centrée sur l'axe de pivotement et destinées à coopérer avec la face interne d'une nervure de guidage (**23**) munie de butées (**36**, **37**) de fin de course de pivotement qui, en coopérant avec les contre-butées, limitent la course de pivotement de la poignée.

14. Robinet selon la revendication 13, **caractérisé en ce que** la partie latérale cylindrique (**32**) est coiffée par une jupe de protection (**23**) ménagée sur la tête de manoeuvre (**12**) et constituée par la nervure portant les butées de fin de course (**36**, **37**).

## Patentansprüche

1. Betätigungsgriff eines Hahns mit geschützter Verriegelung, wobei der Griff (11) umfasst:
- einen Betätigungskopf (12), der dazu bestimmt ist, mit einem Ansatzstück (9) fest verbunden montiert zu werden, das aus dem Körper (2) des Hahns vorsteht und eine Schwenkwelle (8) verlängert, die mit einem drehbaren Absperrorgan (6) fest verbunden ist, das einen im Körper des Hahns ausgebildeten Fluiddurchgang (4) zu unterbrechen oder freizugeben vermag,
- einen beweglichen Riegel (24), der in einer Führungsnut (22) geführt wird, welche in dem Betätigungskopf parallel zur Achse (y) der Schwenkwelle ausgebildet ist, wobei der Riegel (24) dazu bestimmt ist, in eine am Körper des Hahns zum Aufnehmen der Verriegelung angebrachte Arretiervertiefung (31) wenigstens teilweise einzugreifen, wenn sich der Griff (11) und das Absperrorgan (6) in Schließstellung befinden,
- und ein Mittel zum Einhaken (34) für einen lösbaren Anschlag (35), der das ungehinderte Herausziehen des-Riegels (24) aus der Arretiervertiefung (31) verhindert,
**dadurch gekennzeichnet, dass** der Betätigungskopf (12) eine Aufnahme (26) umfasst, in die die Führungsnut (22) mündet, und dass der Riegel (24) mit einem Feststeller (25) versehen ist, der dazu bestimmt ist, in die Aufnahme eingeführt zu werden und sicherzustellen, dass das Herausziehen des Riegels aus der Führungsnut beim Zurückschieben des Riegels in einer senkrecht zur Achse (9) der Schwenkwelle verlaufenden Richtung verhindert wird.

2. Betätigungsgriff nach Anspruch 1,
**dadurch gekennzeichnet, dass** der Riegel (24) und die Führungsnut (22) so ausgebildet sind, dass der Riegel (24) in der Stellung, in der der Griff benutzt wird, seitlich vollständig in der Nut (22) geführt wird.

3. Betätigungsgriff nach Anspruch 1 oder 2,
**dadurch gekennzeichnet, dass** der Riegel (24) am Endstück eines beweglichen Armes (28) befestigt ist, der mit dem rückwärtigen Ende eines Hebels (14) verbunden ist, der den Betätigungskopf verlängert, wobei der bewegliche Arm (28), der Hebel (14) und der Betätigungskopf (12) einstückig ausgebildet sind.

4. Betätigungsgriff nach Anspruch 3,
**dadurch gekennzeichnet, dass** der bewegliche Arm (28) mit dem Hebel des Griffes (14) so ausgebildet ist, dass ein elastisches Organ gebildet wird, das den Riegel (24) ständig in Richtung auf den Körper des Hahns belastet.

5. Betätigungsgriff nach Anspruch 3 oder 4,
**dadurch gekennzeichnet, dass** der bewegliche Arm (28) mit dem rückwärtigen Ende des Hebels (14) durch einen Verbindungsbogen (29) verbunden ist.

6. Betätigungsgriff nach Anspruch 3, 4 oder 5,
**dadurch gekennzeichnet, dass** der bewegliche Arm (2) durch ein die elastische Verformung des Arms einschränkendes Feststellorgan in seiner Bewegung beim Herausziehen des Riegels aus der Arretiervertiefung begrenzt ist.

7. Betätigungsgriff nach einem der Ansprüche 3 bis 6,
**dadurch gekennzeichnet, dass** der bewegliche Arm (28) eine Unterseite umfasst, die mit einer geschweiften Kante ausgebildet ist.

8. Betätigungsgriff nach Anspruch 1 oder 2,
**dadurch gekennzeichnet, dass** der Betätigungskopf (12) mit einem Schutzmantel (23) versehen ist, der dazu bestimmt ist, das seitliche zylinderförmige Teil (32) des Körpers (2) zu überdecken, wobei der Mantel (23), in den die Führungsnut (22) verlängert ist, zudem mit einem Paar schwenkbarer Anschläge (36, 37) versehen ist, die dazu bestimmt sind, mit Gegenanschlägen (40, 41) zusammenzuwirken, die an dem zylinderförmigen Teil (32) des Hahnkörpers angeordnet sind und den Schwenkbereich des Griffs und des Absperrorgans somit zwischen ihren Endstellungen begrenzen.

9. Hahn mit geschützter Verriegelung, umfassend:
- in einem Hahnkörper (2) einen Fluiddurchgang (4), in den ein drehbares Absperrorgan (6) eingefügt ist, das den Fluiddurchgang zu unterbrechen oder freizugeben vermag, wobei dieses Absperrorgan (6) fest mit einer Schwenkwelle (8) verbunden ist, die in dem Körper des Hahns so gelagert ist, dass ihre Achse (y) senkrecht zur Achse (x) des Fluiddurchgangs angeordnet ist und ein Ansatzstück (9) aufweist, das aus dem Körper des Hahns vorsteht,
- einen Griff (11) zur Betätigung des Hahns, welcher umfasst:
. einen Kopf (12) zur Betätigung des Ansatzstücks (9) der Schwenkwelle,
. einen beweglichen Riegel (24), der in einer Führungsnut (22) geführt wird, die in dem Betätigungskopf (12) parallel zu der Achse (y) der Schwenkwelle ausgebildet ist, wobei der Riegel (24) dazu bestimmt ist, in eine am Körper des Hahns zum Aufnehmen der Verriegelung (24) angebrachte Arretiervertiefung (31) wenigstens teilweise einzugreifen, wenn sich der Griff (11) und das Absperrorgan (6) in Schließstellung befinden,
. und ein Mittel zum Einhaken (34) für einen lösbaren Anschlag (35), der das ungehinderte Herausziehen des Riegels aus der Arretiervertiefung verhindert,
**dadurch gekennzeichnet dass**, er einen Betätigungsgriff (11) gemäß Anspruch 1 umfasst.

10. Hahn nach Anspruch 9,
**dadurch gekennzeichnet, dass** die Vertiefung (31) zur Arretierung des Riegels (24) an einem seitlichen zylinderförmigen Teil (32) des Körpers des Hahns ausgebildet ist.

11. Hahn nach Anspruch 10,
**dadurch gekennzeichnet, dass** das seitliche zylinderförmige Teil (32) des Körpers des Hahns mit einer Rastausnehmung (43) versehen ist, die dazu bestimmt ist, das stirnseitige Ende des Riegels (24) aufzunehmen, so dass dieser durch die elastischen Mittel weniger stark beansprucht wird.

12. Hahn nach Anspruch 11,
**dadurch gekennzeichnet, dass** zwischen der Rastausnehmung (43) und der Arretiervertiefung (31) eine geneigte Ebene (43) zum Führen des Riegels vorgesehen ist.

13. Hahn nach einem der Ansprüche 10 bis 12,
**dadurch gekennzeichnet, dass** der seitliche zylinderförmige Teil (32) mit einem Paar vorstehender Gegenanschläge (40, 41) versehen ist, die miteinander durch eine auf die Schwenkachse ausgerichtete Führungswand (42) verbunden und dazu bestimmt sind, mit der Innenseite einer Führungsrippe (23) zusammenzuwirken, die mit schwenkbaren Endanschlägen (36, 37) versehen ist, die in Zusammenwirken mit den Gegenanschlägen den Schwenkbereich des Griffs begrenzen.

14. Hahn nach Anspruch 13,
**dadurch gekennzeichnet, dass** der seitliche zylinderförmige Teil (32) von einem Schutzmantel (23) überdeckt wird, der an dem Betätigungskopf (12) ausgebildet ist und von der Rippe gebildet wird, die die Endanschläge (36, 37) trägt.

## Claims

1. A control handle for a tap having a protected latch, the handle (**11**) including:
- a drive head (12) designed to be mounted securely on an endpiece (9) projecting from the body (2) of the tap and extending a pivot shaft (8) secured to a rotary stop plug (6) capable of closing or opening a fluid passage (4) provided in the body of the tap;
- a moving latch (24) that is guided in a guide groove (22) provided in the drive head, parallel to the axis (y) of the pivot shaft, the latch (24) being designed to be engaged, at least in part, inside a locking cavity (31) provided on the body of the tap in such a manner as to receive said latch when the handle (11) and the plug (6) are in the tap-closed position; and
- fastening means (34) for a removable abutment (35) which prevents the latch (24) from being extracted freely from the locking cavity (31),
the control handle being **characterized in that** the drive head (12) includes a housing (26) into which the guide groove (22) opens out, and **in that** the latch (24) is provided with a detent (25) designed to be inserted inside said housing, and designed to prevent the latch from being pulled back out from the guide groove in a direction perpendicular to the axis (y) of the pivot shaft.

2. A control handle according to claim 1, **characterized in that** the latch (24) and the guide groove (22) are shaped so that when the handle is in a working position, the latch (24) is fully guided laterally in the groove (22).

3. A control handle according to claim 1 or claim 2, **characterized in that** the latch (24) is mounted on the end portion of a moving arm (28) connected to the rear end of a branch (14) extending the drive head; the moving arm (28), the branch (14), and the drive head (12) forming a single piece.

4. A control handle according to claim 3, **characterized in that** the moving arm (28) is shaped with the branch (14) of the handle in such a manner as to constitute a resilient member constantly urging the latch (24) towards the body of the tap.

5. A control handle according to claim 3 or claim 4, **characterized in that** the moving arm (28) is connected to the rear end of the branch (14) by means of a connecting bend (29).

6. A control handle according to claim 3, 4, or 5, **characterized in that** the moving arm (28) is limited in its displacement for extracting the latch from the locking cavity by means of a stop member limiting resilient deformation of the arm.

7. A control handle according to any one of claims 3 to 6, **characterized in that** the moving arm (28) includes an undulating bottom face (28a).

8. A control handle according to claim 1 or 2, **characterized in that** the drive head (12) is provided with a protective skirt (23) designed to overlap the cylindrical side portion (32) or the body (2), the skirt (23) into which the guide groove (22) is extended, also being provided with a pair of pivot abutments (36, 37) designed to co-operate with counter-abutments (40, 41) provided on the cylindrical portion (32) of the body of the tap, thereby limiting the pivot stroke of the handle and of the plug between their extreme positions.

9. A tap having a protected latch, said tap being of the type including:
- in a tap body (2), a fluid passage (4) in which a rotary plug (6) capable of closing or opening the fluid passage is interposed, the plug (6) being secured to a pivot shaft (8) housed in the body of the tap so that its axis (y) is perpendicular to the axis (x) of the fluid passage, and presenting an endpiece projecting from the body of the tap;
- a control handle (11) for controlling the tap and including:
· a drive head (12) for driving the endpiece (9) of the pivot shaft;
· a moving latch (24) that is guided into a guide groove (22) provided in the drive head, parallel to the axis (y) of the pivot shaft, the latch (24) being designed to be engaged, at least in part, inside a locking cavity (31) provided on the body of the tap in such a manner as to receive said latch (24) when the handle (11) and the plug (6) are in the closed position of the tap; and
· fastening means (34) for a removable abutment (35) which prevents the latch (24) from being extracted freely from the locking cavity,
the tap being **characterized in that** it includes a control handle (11) according to claim 1.

10. A tap according to claim 9, **characterized in that** the locking cavity (31) of the latch (24) is provided on a cylindrical side portion (32) of the body of the tap.

11. A tap according to claim 10, **characterized in that** the cylindrical side portion (32) of the body of the tap is provided with a rest recess (43) designed to receive the front end of the latch (24) so that said latch is urged less strongly by the resilient means.

12. A tap according to claim 11, **characterized in that** a ramp (44) for guiding the latch is provided between the rest recess (43) and the locking cavity (31).

13. A tap according to any one of claims 10 to 12, **characterized in that** the cylindrical side portion (32) is provided, in projection, with a pair of counter-abutments (40, 41) connected together by a guide wall (42) centered on the pivot axis and designed to co-operate with the inside face of a guide rib (23) provided with end of pivot-stroke abutments (36, 37) which, by co-operating with the counter-abutments, limit the pivot stroke of the handle.

14. A tap according to claim 13, **characterized in that** the cylindrical side portion (32) is overlapped by a protective skirt (23) provided on the drive head (12) and constituted by the rib carrying the end of stroke abutments (36, 37).
